# EUROPEAN PATENT SPECIFICATION

(11) **EP 1 561 643 B1**
(45) Date of publication and mention of the grant of the patent: **13.12.2006**
(21) Application number: 05002111.2
(22) Date of filing: 02.02.2005
(51) Int. Cl.: B60R 11/02, B60R 25/04

(54) **Anti-theft system using current position information**
Diebstahlschutzsystem unter Verwendung der aktuellen Position
Systeme anti-vol utilisant des informations sur la position actuelle

(30) Priority: 05.02.2004 JP 2004029586
(43) Date of publication of application: 10.08.2005
(73) Proprietor: Pioneer Corporation, Tokyo-to (JP)
(72) Inventor: Hara, Yoichi c/o Pioneer Corporation, Yamada, Kawagoe-shi Saitama-ken (JP); Yamamoto, Hirotoshi c/o Pioneer Corporation, Yamada, Kawagoe-shi Saitama-ken (JP)
(74) Representative: Tappe, Hartmut

(56) References cited:
- EP-A- 0 341 182
- EP-A- 0 736 425
- EP-A- 0 894 683
- WO-A-03/044632
- DE-A1- 3 742 302
- DE-A1- 4 224 536
- US-A1- 2003 151 306

## Description

### BACKGROUND OF THE INVENTION

### 1.Field of the Invention:

This invention relates to an anti-theft system that controls a vehicle-mounted apparatus according to the current position of the vehicle.

### 2.Related Art:

In recent years, vehicle-mounted apparatuses have increased in cost as performance has improved, and thus loss or damage due to theft has also increased. Particularly, apparatuses such as vehicle-mounted apparatuses having a monitor that can be seen from outside the vehicle, or audio apparatuses that output sound at a volume that is large enough to be heard outside the vehicle make it possible for persons outside the vehicle to easily detect whether an expensive vehicle-mounted apparatus is mounted in the vehicle, so there are cases where a thief follows the vehicle and steals the apparatus after the vehicle has stopped at home or the like while the user is away from the vehicle.

Conventionally, there has been technology in which, in order to prevent loss or damage from theft, the vehicle-mounted apparatus (for example a monitor) is stored inside the dashboard by pressing a certain button so it is not possible to detect from outside the vehicle whether a vehicle-mounted apparatus is mounted in the vehicle (Reference: Japanese Laid Open Patent Application No. H02-31577).

With the technology described above, when the user approached places where there was a possibility of frequent appearances of thieves, in order to avoid being followed by a thief, the user stored the monitor that could be seen from outside the vehicle inside the dashboard by manually operating a button so that a thief could not tell that an expensive vehicle-mounted apparatus was mounted in the vehicle.

### SUMMARY OF THE INVENTION

However, in the prior technology described above, the user must manually operate the button, and therefore the user must pay attention as to where and at what point in time to press the button, so there were inconveniences for the user, or a loss of anti-theft performance in the case where the user forgets to press the button and it becomes possible for a thief to see the vehicle-mounted apparatus from outside the vehicle while the vehicle is in an area where it is possible for a thief to know that a vehicle-mounted apparatus is mounted in the vehicle.

DE 37 42 302 A discloses concealing a vehicle-mounted device, based in particular on door actuation or ignition current.

DE 42 24 536 A discloses a device aiming at avoiding that a vehicle exits a certain, predefined region using a GPS system. This device comprises a current-position-creation device, a position-information setting device and a judgment device which determines whether the current position of the vehicle is in the predefined region as near the border of this region.

The object of this invention is to provide an anti-theft system that at least makes it possible to prevent a vehicle-mounted apparatus from being seen from outside the vehicle when in an area where there is a possibility that thieves could be present.

The above object of the present invention can be achieved by an anti-theft system of the present invention. The anti-theft system is provided with: a current-position-creation device which creates current-position information that indicates the current position of a vehicle; a position-information-setting device which makes it possible to set specified position information according to arbitrary conditions; a judgment device which determines whether or not the current-position information matches the specified position information; and a vehicle-mounted-device-control unit which makes it impossible to detect that a vehicle-mounted device is mounted in the vehicle from outside of the vehicle when it was determined by the judgment device that there was a match.

According to the present invention, when the vehicle enters an arbitrary position conditions set by a user, or in other words, enters a circular range, the vehicle has entered a range where it is not desired that a monitor is visible from outside the vehicle, so during use, it is possible to automatically hide the monitor that is visible from outside the vehicle so that it can no longer be seen from outside the vehicle, and thus, in comparison to the prior technology, the anti-theft system is able to better improve safety during operation of the vehicle by doing away with manual operation by the user in order to store the monitor, and also improves the ability to prevent theft by not forgetting to store the monitor.

According to one embodiment of the present invention the vehicle-mounted-device-control unit comprises a drive device which drives the vehicle-mounted device into a protruding position in which it can be detected from outside the vehicle, or into a stored position in which it cannot be detected from outside the vehicle; and the drive device drives the vehicle-mounted device that is in the protruding position to the stored position when the judgment device determines that the current-position information and the specified position information match.

In according to another embodiment of the present invention the vehicle-mounted-device-control unit comprises a volume-level-control device that increases or decreases the level of the audio output of the vehicle-mounted device that is capable of audio output, and the volume-level-control device decreases the level of the audio output when the judgment device determines that the current-position information and the specified position information match.

According to the afore-mentioned embodiment of the present invention, when a vehicle enters an arbitrary position conditions set by a user, or in other words, enters a circular range, the vehicle has entered a range where it is not desired that it is possible to guess that an audio device is mounted in the vehicle from outside the vehicle, so when in use, it is possible to automatically lower the level of the sound level, which is the basis of the sound having a volume that can be heard from outside the vehicle, so that sound can no longer be heard from outside the vehicle, and thus, in comparison to the prior technology, the anti-theft system is able to better improve safety during operation of the vehicle by doing away with manual operation by the user in order to lower the volume of the sound output by a speaker , and also improves the ability to prevent theft by not forgetting to lower the volume of the sound output by the speaker.

According to another embodiment of the present invention the vehicle-mounted device is provided with a backlight-control unit which turns on or turns off the backlight of the vehicle-mounted device; and the backlight-control unit turns off the backlight of the vehicle-mounted device when the judgment device determines that the current-position information and the specified position information match

According to the afore-mentioned embodiment of the present invention, when a vehicle enters an arbitrary position conditions set by a user, or in other words, enters a range, the vehicle has entered a range where it is not desired that a monitor is visible from outside the vehicle, so when in use, it is possible to automatically turn off the backlight of the monitor that is visible from outside the vehicle due to the backlight so that it can no longer be seen from outside the vehicle, and thus, in comparison to the prior technology, the anti-theft system is able to better improve safety during operation of the vehicle by doing away with manual operation by the user in order to turn off the backlight of the monitor, and also improves the ability to prevent theft by not forgetting to turn off the backlight of the monitor.

According to another embodiment of the present invention the anti-theft system is further provided with an ambient-light-measurement device which measures the brightness of light outside of the vehicle and a comparison device which compares the value of the brightness of ambient light measured by the ambient-light-measurement device with predetermined specified values that are reference brightness values for the ambient light wherein according to the comparison result by the comparison unit, the vehicle-mounted-device-control until makes it impossible to detect the vehicle-mounted device when the judgment device determines that the current-position information and the specified position information match.

According to the afore-mentioned embodiment of the present invention, when the vehicle enters an arbitrary position conditions set by a user, or in other words, enters a downtown, the vehicle has entered a range where it is not desired that the monitor be visible from outside the vehicle, so when in use, according to the brightness outside of the vehicle, it is possible to automatically keep on, dim or turn off of the backlight of a monitor that makes it possible for a vehicle-mounted apparatus to be seen from outside the vehicle, and thus, in comparison to the prior technology, the anti-theft system is able to better improve safety during operation of the vehicle by doing away with manual operation by the user in order to change the control of the backlight of the monitor according to the brightness of the light outside the vehicle, and also improves the ability to prevent theft by properly changing the control of the backlight of the monitor according to the brightness of the light outside the vehicle.

The arbitrary conditions can be an arbitrary position specified by the user and a distance from the arbitrary position wherein the specified position information indicates all positions within a circular range having the arbitrary position as its center and the distance as its radius.

The above object of the present invention can be achieved by an anti-theft method according to claim 7. The anti-theft method is provided with: a current-position-creation process of creating current-position information that indicates the current positionofavehicle; a position-information-setting process of setting specified position information in map information by inputting arbitrary conditions; a projection process of projecting the current-position information on the map information; a judgment process of determining whether or not the current-position information matches the specified position information on the map information; and a control process of making it impossible to detect that a vehicle-mounted device is mounted in the vehicle from outside of the vehicle when it was determined by the judgment process that there was a match.

According to the present invention, when the vehicle enters an arbitrary position conditions set by a user, or in other words, enters a circular range, the vehicle has entered a range where it is not desired that a monitor is visible from outside the vehicle, so during use, it is possible to automatically hide the monitor that is visible from outside the vehicle so that it can no longer be seen from outside the vehicle, and thus, in comparison to the prior technology, the anti-theft method is able to better improve safety during operation of the vehicle by doing away with manual operation by the user in order to store the monitor, and also improves the ability to prevent theft by not forgetting to store the monitor.

According to one embodiment of the inventive method the anti-theft method is provided with: an ambient-light-measurement process of measuring the brightness of light outside of the vehicle when the judgment process determined there was a match; a comparison process of comparing the value of the brightness of ambient light measured by the ambient-light-measurement process with predetermined specified values that are reference brightness values for the ambient light.

According to the afore-mentioned embodiment of the inventive method, when a vehicle enters an arbitrary position conditions set by a user, or in other words, enters a downtown area, the vehicle has entered a range where it is not desired that a monitor is visible from outside the vehicle, so when in use, according to the brightness outside of the vehicle, it is possible to automatically keep on, dim or turn off of the backlight of the monitor that makes it possible for the vehicle-mounted apparatus to be seen from outside the vehicle.

The above object of the present invention can be achieved by a recording medium of the present invention according to claim 9. The recording medium on which an anti-theft program is recorded in a readable way by a computer included in an anti-theft system, an anti-theft program causing the computer to function as: a current-position-creationdevice which creates current-position information that indicates the current position of a vehicle; a position-information-setting device which sets specified position information in map information by inputting arbitrary conditions; a projection device which projects the current-position information on the map information; a judgment device which determines whether or not the current-position information matches the specified position information on the map information; and a control device which makes it impossible to detect that a vehicle-mounted device is mounted in the vehicle from outside of the vehicle when it was determined by the judgment process that there was a match.

According to the present invention, when the vehicle enters an arbitrary position conditions set by a user, or in other words, enters a circular range, the vehicle has entered a range where it is not desired that a monitor is visible from outside the vehicle, so during use, it is possible to automatically hide the monitor that is visible from outside the vehicle so that it can no longer be seen from outside the vehicle, and thus, in comparison to the prior technology, the recording medium is able to better improve safety during operation of the vehicle by doing away with manual operation by the user in order to store the monitor, and also improves the ability to prevent theft by not forgetting to store the monitor.

### BRIEF DESCRIPTION OF THE DRAWINGS

FIG. 1 is a block diagram of the anti-theft system 1 of a first to third embodiment of the invention.
FIG. 2 is a drawing showing conditions that are set arbitrarily by the user, and a drawing that shows the image of the current-position information of a vehicle that is projected onto map information.
FIG. 3 is a flowchart of the process for storing condition-range information that shows the conditions input by the user.
FIG. 4 is a flowchart of the process of judging whether or not the position information contained in arbitrary conditions matches the current-position information.
FIG. 5 is a flowchart of the operation of a monitor-drive unit 18 that makes it impossible to see a monitor 41 from outside a vehicle.
FIG. 6 is a drawing showing conditions that are set arbitrarily by the user.
FIG. 7 is a flowchart of the operation of a backlight-control unit 19 that makes it impossible to see a mounted monitor 41 from outside a vehicle.
FIG. 8 is a flowchart of the operation of an audio-control unit 21 that makes it impossible to guess from outside a vehicle that an audio apparatus 42 is mounted.
FIG. 9 is a block diagram of the anti-theft system of a fourth embodiment of the invention.
FIG. 10 is a drawing showing a pre-registered specified range that is set by the user as an arbitrary condition.
FIG. 11 is a flowchart of the process for judging whether or not the position information contained in the arbitrary conditions matches the current-position information.
FIG. 12 is a flowchart of the operation for switching the control signal of a backlight-control unit 19 according to the brightness of the light outside a vehicle.
FIG. 13 is a block diagram showing an impact-detection-alarm system, which is the anti-theft system 3 and external-anti-theft system of a fifth embodiment of the invention.
FIG. 14 is a flowchart of the process of judging whether or not the position information contained in the arbitrary conditions matches the current-position information.
FIG. 15 is a flowchart of the operation of the impact-detection-alarm system 60 for starting detection of impact to a vehicle-mounted apparatus 40 or to a vehicle.

### DESCRIPTION OF THE PREFERRED EMBODIMENTS

The preferred embodiments of the invention will be explained below.

### (Embodiment 1)

First, the construction of the anti-theft system of a first embodiment of the invention will be explained for the case where the anti-theft system is applied to a navigation system.

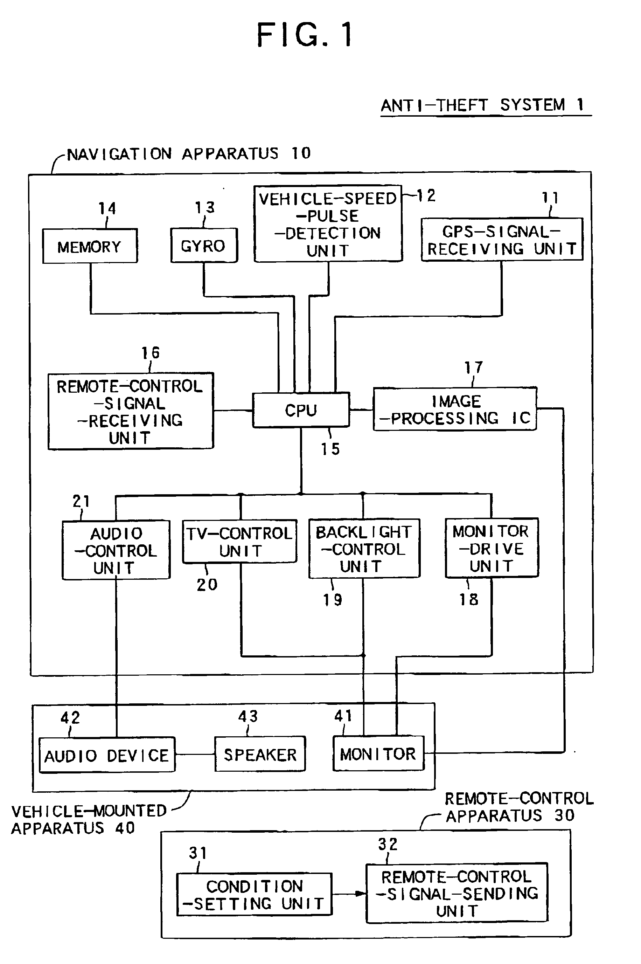

As shown in FIG. 1 the anti-theft system 1 of this embodiment comprises: a navigation apparatus 10 that detects the current position of the vehicle and creates current-position information for that vehicle, then sets arbitrary conditions that were input by the user using a remote-control apparatus 30 (described later) in map information and projects the current-position information of the vehicle onto the map information, and when the current-position information of the vehicle matches specified position information that was created from the arbitrary conditions input by the user, makes it impossible to detect the vehicle-mounted apparatus 40 (described later) from outside the vehicle; and a remote-control apparatus 30 that sends information to the navigation apparatus 10 that indicates the arbitrary conditions that were input by the user.

The navigation apparatus 10 comprises: a GPS-signal-receiving unit 11 that receives a signal from a GPS (Global Positioning System) satellite and creates GPS position information that indicates the longitude and latitude of the vehicle's position; a vehicle-speed-pulse-detection unit 12 that detects the speed pulse of the vehicle and creates operating-speed information for the vehicle; a gyro 13 that measures the direction of the vehicle and creates traveling-direction information; and a memory that stores map information.

Also, the navigation apparatus 10 comprises: a CPU (Central Processing Unit) 15, which is the current-position-information-creation means, as well as the judgment device for the anti-theft system of this invention, and that uses the operating-speed information and traveling-direction information to calculate the current position of the vehicle, and when map information is input, projects the calculated current-position information onto the map information, and sets arbitrary conditions input by the user in the map information, and determines whether or not the current-position information for the vehicle matches the position information in the map information that was created from the arbitrary conditions input by the user, then sends control information to a monitor-drive unit 18 (described later), backlight-control unit 19, TV-control unit 20 or audio-control unit 21; a remote-control-signal-receiving unit 16 that receives information indicating the arbitrary conditions input by the user from the remote-control apparatus 30; and a image-processing IC (Integrated Circuit) 17 that outputs map information, current-position information for the vehicle and the like that are processed by the CPU 15 to the vehicle-mounted apparatus 40.

Also, the navigation apparatus 10 comprises: a monitor-drive unit 18, which is the drive device for the invention, and that drives the monitor 41 of the vehicle-mounted apparatus 40 (described later) and stores it inside the dashboard; a backlight-control unit 19 that performs control such as turning ON, turning OFF or dimming the backlight of the monitor; a TV-control unit 20 that outputs TV-image information to the vehicle-mounted apparatus 40; and an audio-control unit 21, which is the volume-level-control device for the invention, and that controls the level of the audio signal output from the audio device 42 (described later) of the vehicle-mounted apparatus 40 to the speaker 43 (described later).

The monitor-drive unit 18, backlight-control unit 19, TV-control unit 20 and audio-control unit 21 form the vehicle-mounted-device-control unit for the invention.

Also, the remote-control apparatus 30 comprises: a condition-setting unit 31 than sets the arbitrary conditions input by the user; and a remote-control-signal-sending unit 32 that sends information indicating the input arbitrary conditions to the navigation apparatus 10 using a remote-control signal.

Moreover, the vehicle-mounted apparatus 40 comprises: a monitor 41 to which image information is input from the image-processing IC 17 or TV-control unit 20, and displays an image based on the input image information; an audio device 42 for which the level of the audio signal is controlled by the audio-control unit 21; and a speaker 43 to which an audio signal is output from the audio device 42 as audio.

The monitor 41, audio device 42 or speaker 43 are vehicle-mounted devices that can be detected from outside the vehicle.

The term detectable from outside the vehicle used in the claims of this invention is not limited to a person outside the vehicle just being able to definitely know through the use of human senses such as sight and hearing that a vehicle-mounted device is mounted inside the vehicle and what type of vehicle-mounted device it is, but also includes the person outside the vehicle being able to guess through the use of human senses such as sight and hearing what kind of device is mounted in the vehicle.

Next, the operation of the anti-theft system 1 of this embodiment will be explained.

First, in the navigation apparatus 10, the GPS-signal-receiving unit 11 receives a GPS signal from a GPS satellite, and creates GPS-position information that expresses the vehicle's position using the longitude and latitude information. Also, the GPS-signal-receiving unit outputs the created GPS-position information to the CPU 15.

Next, the vehicle-speed-pulse-detection unit 12 detects the speed pulse of the vehicle and creates operating-speed information for the vehicle from the detected vehicle-speed pulse. Also, the gyro 13 measures the direction of the vehicle and creates traveling-direction information for the vehicle from the measured vehicle direction. Moreover, the created operating-speed information and traveling-direction information for the vehicle are output to the CPU 15.

The CPU 15 uses the GPS-position information, the operating-speed information and traveling-direction information to calculate current-position information for the vehicle that expresses the current position of the vehicle.

Next, the map information that is stored in the memory 14 is output to the CPU 15.

The CPU 15 inputs the map information to the image-processing IC 17, and based on the input map information, the image-processing IC 17 creates map-image information that expresses the map of a specified area as an image. The image-processing IC 17 then outputs the created map-image information to the vehicle-mounted apparatus 40

Next, in the vehicle-mounted apparatus 40, the map-image information is input to the monitor 41, and the monitor 41 displays the input map-image information as a map image.

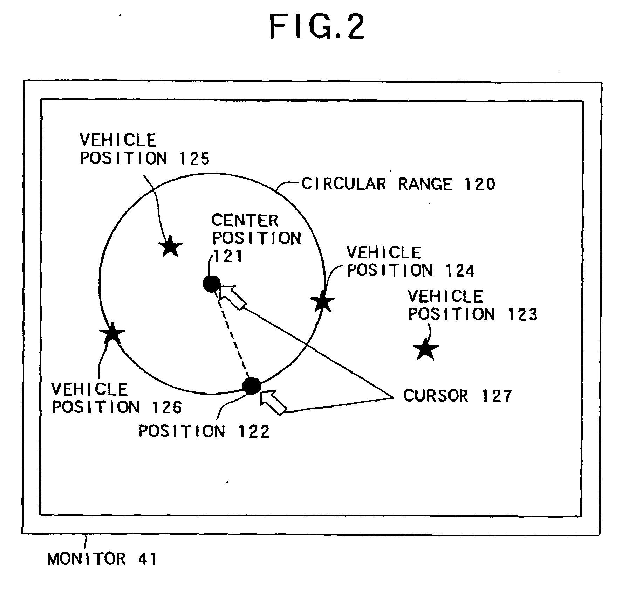

As shown in FIG. 2, the user looking at the map image displayed on the monitor 41 uses the condition-setting unit 31 of the remote-control apparatus 30, and with the cursor 127 sets an arbitrary position on the map image as the center position 121, and the user also sets a different arbitrary position 122. The remote-control-signal unit 32 includes a circular range 120, which has the set center position 121 as its center and the distance between the center position 121 and position 122 as its radius, in the remote-control signal as condition-range information, or in other words, as the arbitrary conditions set by the user of this invention, and sends that remote-control signal to the navigation apparatus 10.

In the navigation apparatus 10, the remote-control-signal-receiving unit 16 receives the remote-control signal and outputs the condition-range information that is contained in the received remote-control signal to the CPU 15.

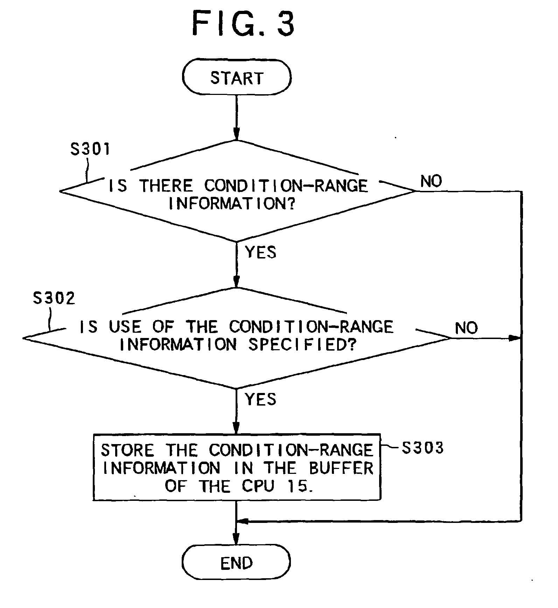

Next, as shown in the flowchart (see FIG. 3) showing the process of storing the condition-range information, the CPU 15 determines whether or not there is condition-range information (step S301), and when it determines that there is condition-range information, it determines whether or not using the conditions-range information has been specified (step 5302), and when it determines that that using the condition-range information has been specified, it stores the condition-range information in the buffer (not shown in the figure) of the CPU 15 (step S303).

The CPU 15 then projects the current-position information for the vehicle that was input to the CPU 15 onto the map information that was similarly input to the CPU 15, and outputs the map information with the projected current-position information for the vehicle to the image-processing IC 17.

Next, the image-processing IC 17 creates navigation-image information that shows a map for performing route guidance that centers on the current position of the vehicle, and outputs the created navigation-image information to the vehicle-mounted apparatus 40.

In the vehicle-mounted apparatus 40, the navigation-image information is input to the monitor 41, and the monitor 41 displays a navigation image based on the input navigation-image information.

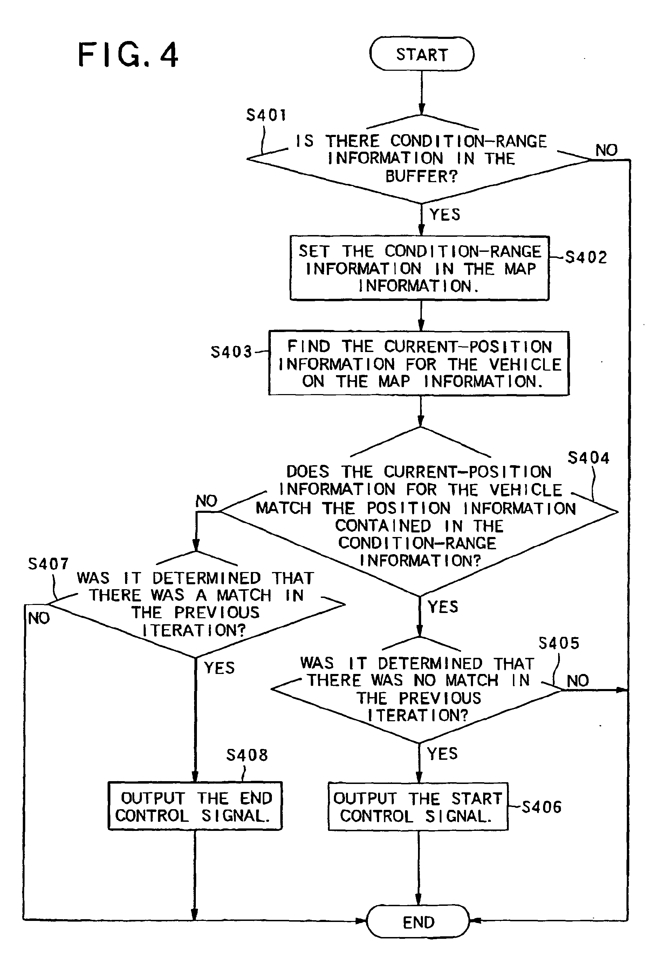

Next, as shown in the flowchart (see FIG 4) of the judgment process for determining whether or not the position information contained in the condition-range information matches the current-position information, the CPU 15 determines whether or not there is condition-range information stored in the buffer (step S401), and when it determines that condition-range information is stored, the CPU 15 reads the condition-range information from the buffer and sets the circular range 120 (see FIG. 2) expressed by the read condition-range information onto the map information (step S402).

The CPU 15 then detects the current-position information for the vehicle on the map information (step 5403) and determines whether or not the detected current-position information for the vehicle matches the position information contained in the condition-range information (step S404).

Also, step S403 and step S404 are performed repeatedly within a specified time interval, and in step S404 when it is determined that there is a match, but it was determined in the iteration of step S404 just previous to when it was determined that there was a match that there was no match (step 5405), it is recognized that the vehicle has entered the arbitrary conditions set by the user, or in other words, entered the circular range 120 shown in FIG. 2, and the CPU 15 outputs a start signal to the monitor-drive unit 18 (step S406).

Moreover, when it is determined in step S404 that there was a match, and that there was also a match in the iteration of step S404 just previous to when it was determined that there was a match, then it is recognized that the vehicle is already in the arbitrary conditions set by the user, or in other words, in the circular range 120 shown in FIG. 2, and processing ends.

Furthermore, when it is determined in step S404 that there is no match, and when it was determined in the iteration of step S404 just previous to when it was determined that there was no match that there was a match (step S407), then it is recognized that the vehicle has left the arbitrary conditions set by the user, or in other words, left the circular range 120 shown in FIG. 2, and the CPU 15 outputs an end signal to the monitor-drive unit 18 (step S408).

Here, step S403 to step S408 will be illustrated using FIG. 2.

First, in step S403 when the current position of the vehicle that is detected on the map information is vehicle position 123, the vehicle is not at a position that corresponds to the arbitrary conditions set by the user (is not inside the circular range 120), so the CPU 15 ends processing.

Also, in step S403 when the current position of the vehicle that is detected on the map information is the vehicle position 124, then in step S405 it is recognized that the vehicle is at a position that corresponds to the arbitrary conditions set by the user (is inside the circular range 120), and in step S406, the CPU 15 outputs a start signal.

Moreover, in step S403 when the current position of the vehicle that is detected on the map information is vehicle position 125, then in step S405, the vehicle is recognized as still being at a position that corresponds to the arbitrary conditions set by the user (inside the circular range 120), and the CPU 15 ends processing.

Furthermore, in step S403 when the current position of the vehicle that is detected on the map information is vehicle position 126, then in step S407, the vehicle is recognized as being at a position that corresponds to leaving the arbitrary conditions set by the user (inside the circular range 120), and in step S408, the CPU 15 outputs an end signal.

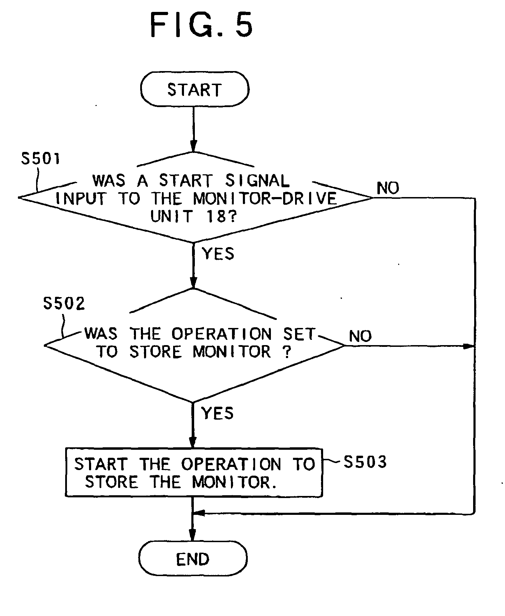

Next, as shown in the flowchart (see FIG. 5) of the operation by themonitor-drive unit 18 that makes it impossible to see the monitor 41 from outside the vehicle, the monitor-drive unit 18 determines whether or not a start signal has been input to the monitor-drive unit 18 (step S501), and when it determines that a start signal has been input, the monitor-drive unit 18 determines whether or not the monitor-drive unit 18 has been set to start the operation for storing the monitor 41 when the start signal is input (step S502).

In step S502, when it is determined that the monitor-drive unit 18 has been set to start the operation of storing the monitor 41 when the start signal is input, the monitor-drive unit 18 starts the storage operation for storing the monitor (step S503).

Also, when an end signal is input to the monitor-drive unit 18, the monitor-drive unit 18 starts the operation for taking out the monitor 41.

As was explained above, the navigation apparatus 10 of the anti-theft system 1 detects the current position of the vehicle and creates current-position information for the vehicle, then projects the current-position information for the vehicle on map information, and when the projected current-position information for the vehicle matches position information that is contained in condition-range information, or in other words, contained in arbitrary position conditions set by the user, it is possible to store the monitor 41 of the vehicle-mounted apparatus in the dashboard or the like by having the monitor-drive unit 18 drive the monitor 41.

Therefore, when the vehicle enters the arbitrary position conditions set by the user, or in other words, enters the circular range 120 (see FIG. 2), the vehicle has entered a range where it is not desired that the monitor 41 be visible from outside the vehicle, so during use, it is possible to automatically hide the monitor that is visible from outside the vehicle so that it can no longer be seen from outside the vehicle, and thus, in comparison to the prior technology, the anti-theft system 1 is able to better improve safety during operation of the vehicle by doing away with manual operation by the user in order to store the monitor 41, and also improves the ability to prevent theft by not forgetting to store the monitor 41.

### (Embodiment 2)

First, the construction of the anti-theft system of a second embodiment of the invention will be explained.

The anti-theft system of this second embodiment of the invention has construction similar to that of the anti-theft system 1 of the first embodiment of the invention shown in FIG. 1, so FIG. 1 will also be used to explain this second embodiment, however an explanation of structural elements that have already been explained for the first embodiment will be omitted.

Next, the operation of the anti-theft system 1 of this embodiment will be explained.

First, in the navigation apparatus 10, the GPS-signal-receiving unit 11 receives a GPS signal from a GPS satellite, and creates GPS-position information that expresses the vehicle position using latitude and longitude information. Also, the GPS-signal-receiving unit 11 outputs the created GPS-position information to the CPU 15.

Next, a vehicle-speed-pulse-detection unit 12 detects the speed pulse of the vehicle, and creates operating-speed information for the vehicle from the detected vehicle-speed pulse. Also, a gyro 13 measures the direction of the vehicle and creates traveling-direction information for the vehicle from the measured direction of the vehicle. The created operating-speed information and traveling-direction information for the vehicle are output to the CPU 15.

The CPU 15 uses the GPS-position information, operating-speed information and traveling-direction information to calculate current-position information for the vehicle that expresses the current position of the vehicle.

Next, map information that is stored in the memory 14 is output to the CPU 15.

The map information is input to the image-processing IC 17 by way of the CPU 15, and based on the input map information, the image-processing IC 17 creates map-image information that expresses a map of a specified area as an image. Also, the image-processing IC 17 outputs the created map-image information to the vehicle-mounted apparatus 40.

Next, in the vehicle-mounted apparatus 40, the map-image information is input to the monitor 41, and the monitor 41 displays the map-image information as a map image.

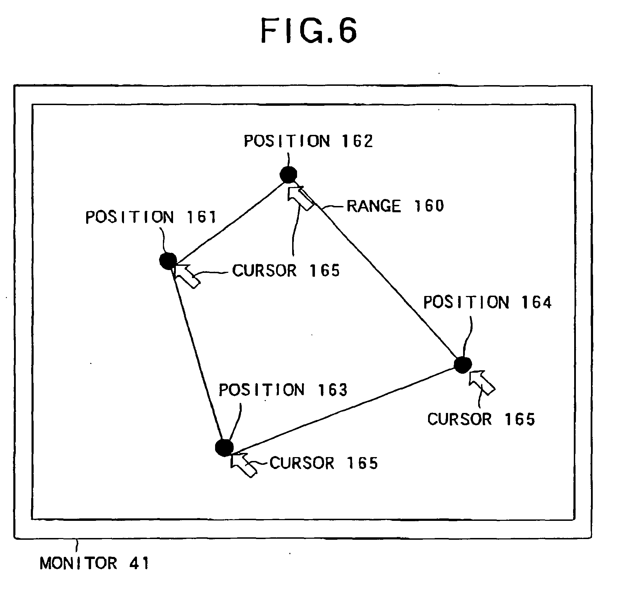

As shown in FIG. 6, the user looks at the map image displayed on the monitor 41, and using the condition-setting unit 31 of the remote-control apparatus 30, creates a specified area with the cursor by connecting a plurality of positions 161, 162, 163, 164 on the map image with straight lines, then with the remote-control-sending unit 32, includes the area 160 within the straight lines in a remote-control signal as the arbitrary conditions set by the user, or in other words, as condition-range information, and sends the remote-control signal to the navigation apparatus 10.

Next, in the navigation apparatus 10, the remote-control-receiving unit 16 receives the remote-control signal, and outputs the condition-range information contained in the received remote-control signal to the CPU 15.

As shown in the flowchart (see FIG. 3) of the process for storing the condition-range information, the CPU 15 determines whether or not there is condition-range information (step S301), and when it determines that there is condition-range information, it determines whether or not using the condition-range information has been specified (step S302), and when it determines that using the condition-range information has been specified, the CPU 15 stores the condition-range information in the buffer of the CPU 15 (step S303).

Next, the CPU 15 projects the current-position information for the vehicle that was input to the CPU 15 onto the map information that was similarly input to the CPU 15, and outputs the map information with the current-position information for the vehicle projected on it to the image-processing IC 17.

The image-processing IC 17 creates navigation-image information that shows a map for performing route guidance that centers on the current position of the vehicle, and outputs the created navigation-image information to the vehicle-mounted apparatus 40.

In the vehicle-mounted apparatus 40, the navigation-image information is input to the monitor 41, and the monitor 41 displays a navigation image based on the input navigation-image information.

Next, as shown in the flowchart (see FIG 4) of the judgment process for determining whether or not the position information contained in the condition-range information matches the current-position information, the CPU 15 determines whether or not there is condition-range information stored in the buffer (step S401), and when it determines that condition-range information is stored, the CPU 15 reads the condition-range information from the buffer and sets the range 160 (see FIG. 6) expressed by the read condition-range information onto the map information (step S402).

The CPU 15 then detects the current-position information for the vehicle on the map information (step S403) and determines whether or not the detected current-position information for the vehicle matches the position information contained in the condition-range information (step S404).

Also, step S403 and step S404 are performed repeatedly within a specified time interval, and in step S404 when it is determined that there is a match, but it was determined in the iteration of step S404 just previous to when it was determined that there was a match that there was no match (step S405), it is recognized that the vehicle has entered the arbitrary conditions set by the user, or in other words, entered the range 160 shown in FIG. 6, and the CPU 15 outputs a start signal to the backlight-control unit 19 (step S406).

Moreover, when it is determined in step S404 that there was a match, and that there was also a match in the iteration of step S404 just previous to when it was determined that there was a match, then it is recognized that the vehicle is already in the arbitrary conditions set by the user, or in other words, in the range 160 shown in FIG. 6, and processing ends.

Furthermore, when it is determined in step S404 that there is no match, and when it was determined in the iteration of step S404 just previous to when it was determined that there was no match that there was a match (step S407), then it is recognized that the vehicle has left the arbitrary conditions set by the user, or in other words, left the range 160 shown in FIG. 6, and the CPU 15 outputs an end signal to the monitor-drive unit 18 (step S408).

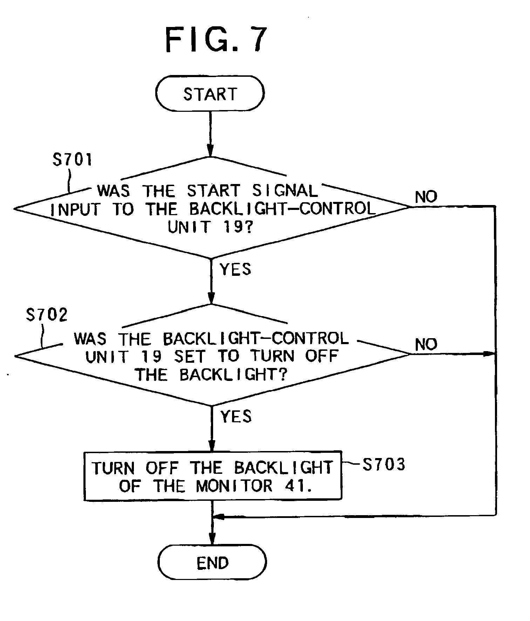

Next, as shown in the flowchart (see FIG. 7) of the operation by the backlight-control unit 19 that makes it impossible to see the monitor 41 from outside the vehicle, the backlight-control unit 19 determines whether or not a start signal has been input to the backlight-control unit 18 (step S701), and when it determines that a start signal has been input, the backlight-control unit 19 determines whether or not the backlight-control unit 19 has been set to turn OFF the backlight of the monitor 41 when the start signal is input (step S702).

In step S702, when it is determined that the backlight-control unit 19 has been set to turn OFF the backlight of the monitor 41 when the start signal is input, the backlight-control unit 19 turns OFF the backlight of the monitor 41 (step S703).

Also, when an end signal is input to the backlight-control unit 19, the backlight-control unit 19 turns ON the backlight of the monitor 41 again.

As was explained above, the navigation apparatus 10 of the anti-theft system 1 detects the current position of the vehicle and creates current-position information for the vehicle, then projects the current-position information for the vehicle on map information, and when the projected current-position information for the vehicle matches position information that is contained in condition-range information, or in other words, contained in arbitrary position conditions set by the user, it is possible to have the backlight-control unit 19 turn OFF the monitor 41 of the vehicle-mounted apparatus 40.

Therefore, when the vehicle enters the arbitrary position conditions set by the user, or in other words, enters the range 160 (see FIG. 6), the vehicle has entered a range where it is not desired that the monitor 41 be visible from outside the vehicle, so when in use, it is possible to automatically turn OFF the backlight of the monitor that is visible from outside the vehicle due to the backlight so that it can no longer be seen from outside the vehicle, and thus, in comparison to the prior technology, the anti-theft system 1 is able to better improve safety during operation of the vehicle by doing away with manual operation by the user in order to turn OFF the backlight of the monitor 41, and also improves the ability to prevent theft by not forgetting to turn OFF the backlight of the monitor 41.

In this second embodiment of the invention, the backlight of the monitor 41 is turned OFF, however, the invention is not limited to this, and for example, instead of a monitor 41, it is also possible to turn OFF the backlight of an audio device 42, or turn OFF the backlight of another kind of device.

Also, the invention is not limited to turning OFF a backlight, and in this second embodiment, instead of the backlight-control unit 19 , it is also possible for a TV-control unit 20 to turn OFF the TV screen that is projected on the monitor 41.

### (Embodiment 3)

First, the construction of the anti-theft system of a third embodiment of the invention will be explained.

The anti-theft system of this third embodiment of the invention has construction similar to that of the anti-theft system 1 of the first embodiment of the invention shown in FIG. 1, so FIG. 1 will also be used to explain this third embodiment, however an explanation of structural elements that have already been explained for the first embodiment will be omitted.

Next, the operation of the anti-theft system 1 of this embodiment will be explained.

First, in the vehicle-mounted apparatus, an audio device 42 outputs an audio signal to a speaker 43 at a volume specified by the user, and the speaker 43 outputs sound based on that output audio signal.

Next, in the navigation apparatus 10, a GPS-signal-receiving unit 11 receives a GPS signal from a GPS satellite, and creates GPS-position information that expresses the vehicle position using latitude and longitude information. Also, the GPS-signal-receiving unit 11 outputs the created GPS-position information to the CPU 15.

Next, a vehicle-speed-pulse-detection unit 12 detects the speed pulse of the vehicle, and creates operating-speed information for the vehicle from the detected vehicle-speed pulse. Also, a gyro 13 measures the direction of the vehicle and creates traveling-direction information for the vehicle from the measured direction of the vehicle. The created operating-speed information and traveling-direction information for the vehicle are output to the CPU 15.

The CPU 15 uses the GPS-position information, operating-speed information and traveling-direction information to calculate current-position information for the vehicle that expresses the current position of the vehicle.

Next, map information that is stored in the memory 14 is output to the CPU 15.

The map information is input to the image-processing IC 17 by way of the CPU 15, and based on the input map information, the image-processing IC 17 creates map-image information that expresses a map of a specified area as an image. Also, the image-processing IC 17 outputs the created map-image information to the vehicle-mounted apparatus 40.

Next, in the vehicle-mounted apparatus 40, the map-image information is input to the monitor 41, and the monitor 41 displays the input map-image information as a map image.

As shown in FIG. 2, the user looking at the map image displayed on the monitor 41 uses the condition-setting unit 31 of the remote-control apparatus 30, and with the cursor 127 sets an arbitrary position on the map image as the center position 121, and the user also sets a different arbitrary position 122. The remote-control-signal unit 32 includes a circular range 120, which has the set center position 121 as its center and the distance between the center position 121 and position 122 as its radius, in the remote-control signal as condition-range information, or in other words, as the arbitrary conditions set by the user of this invention, and sends that remote-control signal to the navigation apparatus 10.

In the navigation apparatus 10, the remote-control-signal-receiving unit 16 receives the remote-control signal and outputs the condition-range information that is contained in the received remote-control signal to the CPU 15.

Next, as shown in the flowchart (see FIG. 3) showing the process of storing the condition-range information, the CPU 15 determines whether or not there is condition-range information (step S301), and when it determines that there is condition-range information, it determines whether or not using the conditions-range information has been specified (step S302), and when it determines that that using the condition-range information has been specified, it stores the condition-range information in the buffer (not shown in the figure) of the CPU 15 (step S303).

The CPU 15 then projects the current-position information for the vehicle that was input to the CPU 15 onto the map information that was similarly input to the CPU 15 , and outputs the map information with the projected current-position information for the vehicle to the image-processing IC 17.

Next, the image-proces sing IC 17 creates navigation-image information that shows a map for performing route guidance that centers on the current position of the vehicle, and outputs the created navigation-image information to the vehicle-mounted apparatus 40.

In the vehicle-mounted apparatus 40, the navigation-image information is input to the monitor 41, and the monitor 41 displays a navigation image based on the input navigation-image information.

Next, as shown in the flowchart (see FIG 4) of the judgment process for determining whether or not the position information contained in the condition-range information matches the current-position information, the CPU 15 determines whether or not there is condition-range information stored in the buffer (step S401), and when it determines that condition-range information is stored, the CPU 15 reads the condition-range information from the buffer and sets the circular range 120 (see FIG. 2) expressed by the read condition-range information onto the map information (step S402).

The CPU 15 then detects the current-position information for the vehicle on the map information (step S403) and determines whether or not the detected current-position information for the vehicle matches the position information contained in the condition-range information (step S404)

Also, step S403 and step S404 are performed repeatedly within a specified time interval, and in step S404 when it is determined that there is a match, but it was determined in the iteration of step S404 just previous to when it was determined that there was a match that there was no match (step S405), it is recognized that the vehicles has entered the arbitrary conditions set by the user, or in other words, entered the circular range 120 shown in FIG. 2, and the CPU 15 outputs a start signal to the audio-control unit 21 (step S406).

Moreover, when it is determined in step S404 that there was a match, and that there was also a match in the iteration of step S404 just previous to when it was determined that there was a match, then it is recognized that the vehicle is already in the arbitrary conditions set by the user, or in other words, in the circular range 120 shown in FIG. 2, and processing ends.

Furthermore, when it is determined in step S404 that there is no match, and when it was determined in the iteration of step S404 just previous to when it was determined that there was no match that there was a match (step S407), then it is recognized that the vehicle has left the arbitrary conditions set by the user, or in other words, left the circular range 120 shown in FIG. 2, and the CPU 15 outputs an end signal to the audio-control unit 21 (step S408).

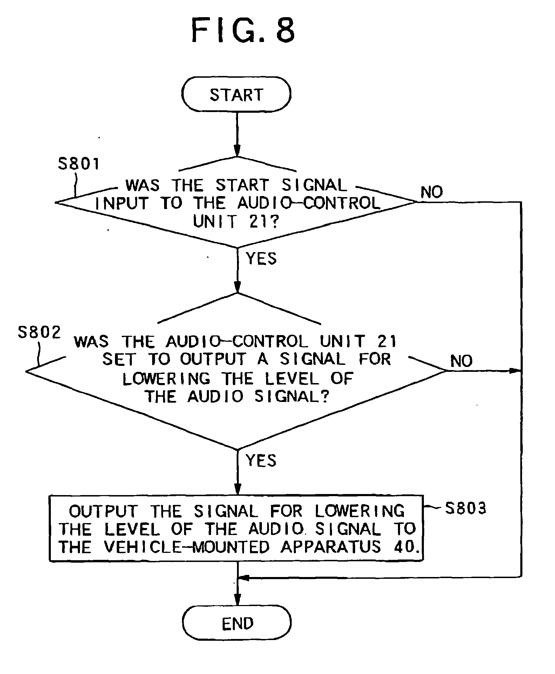

Next, as shown in the flowchart (see FIG. 8) of the operation by the audio-control unit 21 that makes it impossible to guess that an audio device is mounted in the vehicle from outside the vehicle, the audio-control unit 21 determines whether or not a start signal has been input to the audio-control unit 21 (step S801), and when it determines that a start signal has been input, the audio-control unit 21 determines whether or not the audio-control unit 21 has been set to start the operation for outputting a signal to the vehicle-mounted apparatus 40 for controlling the level of the audio signal when the start signal is input (step S802).

In step S802, when it is determined that the audio-control unit 21 has been set to start the operation for outputting a signal to the vehicle-mounted apparatus 40 for controlling the level of the audio signal when the start signal is input, the audio-control unit 21 outputs a signal to the vehicle-mounted apparatus 40 to lower the level of the audio signal (step S803).

Next, in the vehicle-mounted apparatus 40, when a signal is input to the audio device 42 to lower the level of the audio signal, the audio device 42 lowers the level of the audio signal and inputs the audio signal to the speaker 43, and the speaker 43 generates and outputs sound with a volume lowered based on the input audio signal.

Also, when an end signal is input to the audio-control unit 21, the audio-control unit 21 outputs a signal to the vehicle-mounted apparatus 40 to return the audio signal to the original level.

Next, in the vehicle-mounted apparatus 40, the signal to return the audio signal to the original level is input to the audio device 42, and the audio device 42 returns the audio signal and inputs the audio signal to the speaker 43, then the speaker 43 generates and outputs sound having a volume that is returned based on the input audio signal.

As was explained above, the navigation apparatus 10 of the anti-theft system 1 detects the current position of the vehicle and creates current-position information for the vehicle, then projects the current-position information for the vehicle on map information, and when the projected current-position information for the vehiclematches position information that is contained in condition-range information, or in other words, contained in arbitrary position conditions set by the user, the audio-control unit 21 outputs a signal to the audio device 42 of the vehicle-mounted apparatus 40 for controlling the level of the audio signal, and by inputting an audio signal to the speaker 43 whose level has been lowered by the audio device 42, it is possible for the speaker 43 to lower the volume of the output sound.

Therefore, when the vehicle enters the arbitrary position conditions set by the user, or in other words, enters the circular range 120 (see FIG. 2), the vehicle has entered a range where it is not desired that it be possible to guess that an audio device is mounted in the vehicle from outside the vehicle, so when in use, it is possible to automatically lower the level of the sound level, which is the basis of the sound having a volume that can be heard from outside the vehicle, so that sound can no longer be heard from outside the vehicle, and thus, in comparison to the prior technology, the anti-theft system 1 is able to better improve safety during operation of the vehicle by doing away with manual operation by the user in order to lower the volume of the sound output by the speaker 43, and also improves the ability to prevent theft by not forgetting to lower the volume of the sound output by the speaker 43.

### (Embodiment 4)

First, the construction of the anti-theft systemof a fourth embodiment of the invention will be explained.

Of the structural elements of the anti-theft system 2 of this fourth embodiment of the invention, the structural elements that perform the same processes as the structural elements of the anti-theft system 1 (see FIG. 1) of the first to third embodiments of the invention will be given the same reference numbers and an explanation of those elements will be omitted.

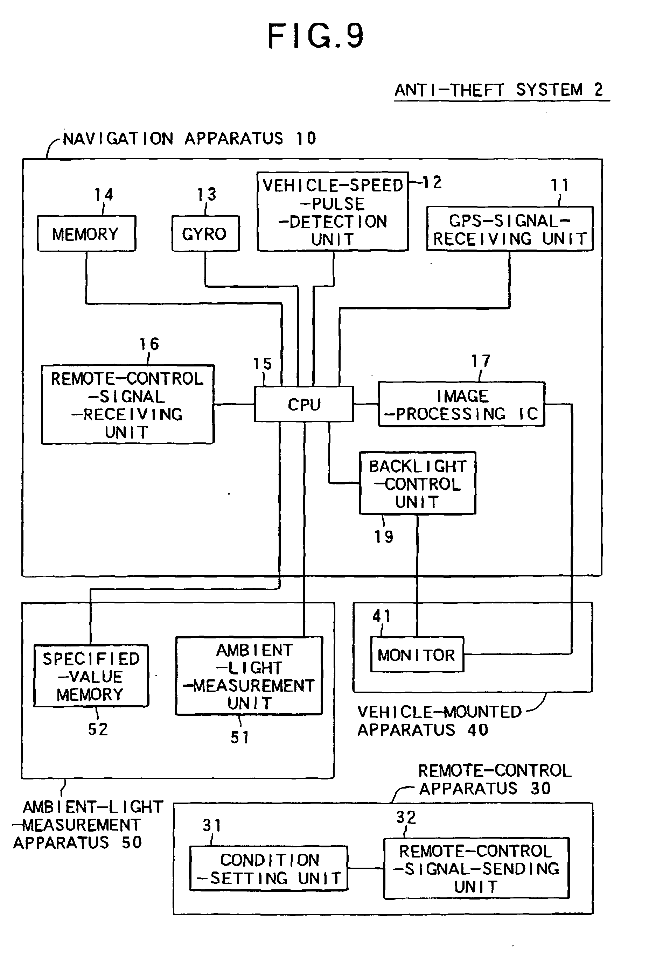

As shown in FIG. 9, the anti-theft system 2 of this embodiment comprises an ambient-light-measurement apparatus 50 that measures the brightness of the light outside of the vehicle.

The ambient-light-measurement apparatus 50 comprises: an ambient-light-measurement unit 51 that is the ambient-light-measurement device for the invention and that measures the brightness of the ambient light at a specified point on the outside of vehicle; a specified-value memory 52 that stores a value that expresses the brightness of the outside light, which is used as the judgment criteria by the backlight-control unit 19 of the navigation apparatus 10 in determining whether or not to keep the backlight ON or to dim the brightness of the backlight (not shown in the figure) of the monitor 41 of the vehicle-mounted apparatus 40, as a first specified value, and stores a value that is lower than the first specified value, which is used as the judgment criteria by the backlight-control unit 19 in determining whether or not to dim or to turn OFF the backlight of the monitor 41, as a second specified value.

Also, in addition to the operation of the CPU 15 of the navigation apparatus 10 explained for the first embodiment of the invention, the CPU 15 functions as a comparison device for the anti-theft system of the invention, and in this embodiment, it compares the value that expresses the brightness of the ambient light measured by the ambient-light-measurement unit 50, and the first and second specified values that the ambient-light-measurement unit 50 stores, and according to the comparison results, outputs a control signal to the backlight-control unit 19 such as a signal to keep the backlight ON, a signal to dim the backlight or a signal to turn the backlight OFF.

Next, the operation of the anti-theft system 2 of this embodiment will be explained.

First, in the navigation apparatus 10, a GPS-signal-receiving unit 11 receives a GPS signal from a GPS satellite and creates GPS-position information that expresses the vehicle's position using the longitude and latitude information. Also, the CPS-signal-receiving unit outputs the created GPS-position information to the CPU 15.

Next, the vehicle-speed-pulse-detection unit 12 detects the speed pulse of the vehicle, and creates operating-speed information for the vehicle from the detected vehicle-speed pulse. Also, the gyro 13 measures the direction of the vehicle and creates traveling-direction information for the vehicle from the measured vehicle direction. Moreover, the created operating-speed information and traveling-direction information for the vehicle are output to the CPU 15.

The CPU 15 uses the GPS-position information, the operating-speed information and traveling-direction information to calculate current-position information for the vehicle that expresses the current position of the vehicle

Next, the map information that is stored in the memory 14 is output to the CPU 15.

The CPU 15 inputs the map information to the image-processing IC 17, and based on the input map information, the image-processing IC 17 creates map-image information that expresses the map of a specified area as an image. The image-processing IC 17 then outputs the created map-image information to the vehicle-mounted apparatus 40.

Next, in the vehicle-mounted apparatus 40, the map-image information is input to the monitor 41, and the monitor 41 displays the input map-image information as a map image.

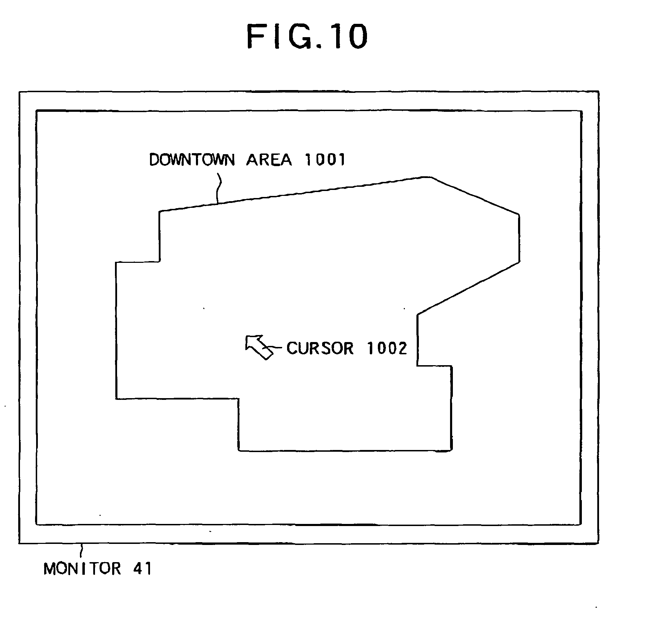

As shown in FIG. 10, the user looking at the map image displayed on the monitor 41 uses the condition-setting unit 31 of the remote-control apparatus 30, and with the cursor 1002 specifies a downtown area 1001 in a registered specified range that is set in advance separate from other areas on the map image, and this downtown area 1001 is set as condition-range information, or in other words, the arbitrary conditions set by the user of this invention, and the remote-control-signal unit 32 includes the set condition-range information in the remote-control signal and sends that remote-control signal to the navigation apparatus 10.

In the navigation apparatus 10, the remote-control-signal-receiving unit 16 receives the remote-control signal and outputs the condition-range information that is contained in the received remote-control signal to the CPU 15.

Next, as shown in the flowchart (see FIG. 3) showing the process of storing the condition-range information, the CPU 15 determines whether or not there is condition-range information (step S301), and when it determines that there is condition-range information, it determines whether or not using the conditions-range information has been specified (step S302), and when it determines that that using the condition-range information has been specified, it stores the condition-range information in the buffer (not shown in the figure) of the CPU 15 (step S303)

The CPU 15 then projects the current-position information for the vehicle that was input to the CPU 15 onto the map information that was similarly input to the CPU 15, and outputs the map information with the projected current-position information for the vehicle to the image-processing IC 17.

Next, the image-processing IC 17 creates navigation-image information that shows a map for performing route guidance that centers on the current position of the vehicle, and outputs the created navigation-image information to the vehicle-mounted apparatus 40.

In the vehicle-mounted apparatus 40, the navigation-image information is input to the monitor 41, and the monitor 41 displays a navigation image based on the input navigation-image information.

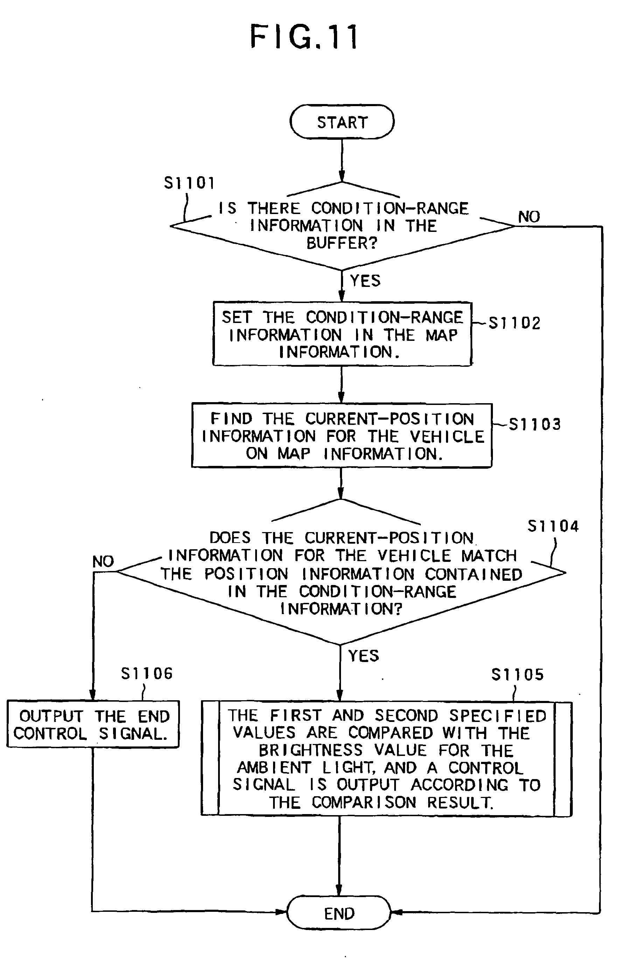

Next, as shown in the flowchart (see FIG. 11) of the judgment process for determining whether or not the position information contained in the condition-range information matches the current-position information, the CPU 15 determines whether or not there is condition-range information stored in the buffer (step S1101), and when it determines that condition-range information is stored, the CPU 15 reads the condition-range information from the buffer and sets the downtown area 1001(see FIG. 10) expressed by the read condition-range information onto the map information (step S1102).

The CPU 15 then detects the current-position information for the vehicle on the map information (step S1103) and determines whether or not the detected current-position information for the vehicle matches the position information contained in the condition-range information (step S1104).

Next, in step S1104, when it is determined that there is a match, it is recognized that the vehicle has entered the arbitrary conditions set by the user, or in other words, has entered the downtown area 1001 shown in FIG. 10, and in the ambient-light-measurement apparatus 50, the ambient-light-measurement unit 51 measures the brightness of the ambient light at a specified point outside the vehicle.

The CPU 15 of the navigation apparatus 10 compares the value for the brightness of the ambient light that was measured by the ambient-light-measurement unit 51 with the first and second specified values stored by the specified-value memory 52, and according to the comparison result, outputs a control signal from the CPU 15 to the backlight-control unit 19 (step S1105).

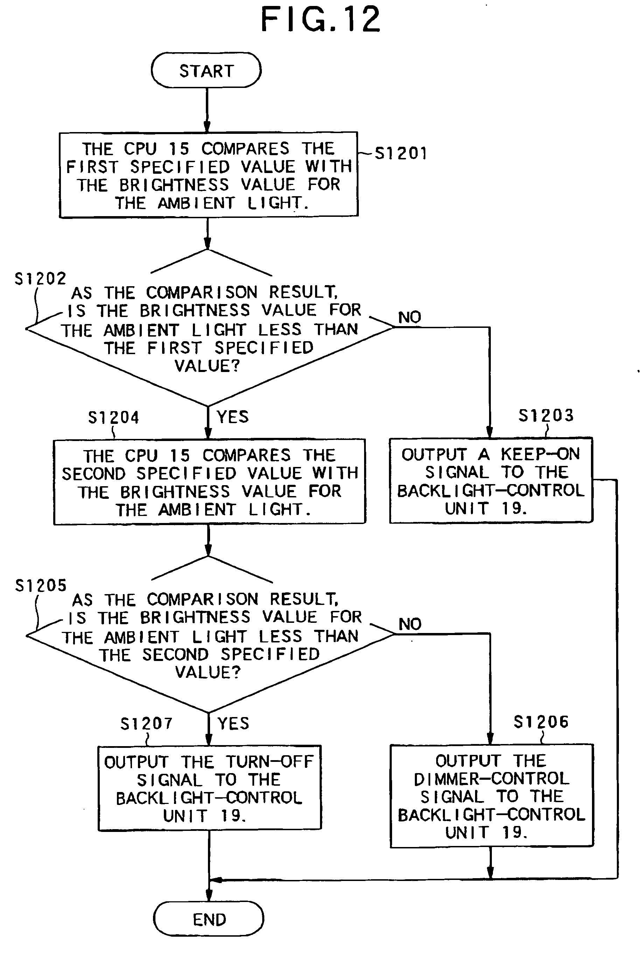

Here, FIG. 12 will be used to explain the operation of step S1105 in more detail.

First, in the ambient-light-measurement apparatus 50, the ambient-light-measurement unit 51 measures the brightness of the ambient light at a specified point on the outside of the vehicle, and outputs the measured value for the brightness of the ambient light to the navigation apparatus 10. Also, the first and second specified values that are stored in the specified-value memory 52 are output to the navigation apparatus 10.

Next, in the navigation apparatus 10, the brightness value for the ambient light, and the first and second specified values are input to the CPU 15, and the CPU 15 compares the brightness value for the ambient light with the first specified value (step S1201), and as the comparison result, determines whether or not the brightness value for the ambient light is less than the first specified value (step S1202).

In step 51202, when it is determined that the brightness value for the ambient light is not less than the specified first value, it is determined that the ambient light is bright enough that the light from the monitor 41 cannot be seen from outside the vehicle, and the CPU 15 outputs a keep-light-ON signal, which is a control signal to keep the light of the backlight of the monitor 41 ON, to the backlight-control unit 19 (step S1203).

Also, in step S1202, when it is determined that the brightness value for the ambient light is less than the first specified value, the CPU 15 compares that brightness value for the ambient light with the second specified value (step S1204), and as the comparison result, determines whether or not the brightness value for the ambient light is less than the second specified value (step 1205).

Next, in step S1205, when it is determined that the brightness value for the ambient light is not less than the second specified value, then it is determined that there is a possibility that the brightness of the ambient light may be low enough that the backlight of the monitor 41 can be seen from outside the vehicle, so the CPU 15 outputs a dimmer-control signal, which is a control signal for dimming the backlight of the monitor 41, to the backlight-control unit 19 (step S1206).

Moreover, in step S1205, when it is determined that the brightness value for the ambient light is less than the second specified value, then it is determined that the ambient light is dark enough that the backlight of the monitor can be sufficiently seen from outside the vehicle, so the CPU 15 outputs a light-OFF signal, which is a control signal for turning OFF the backlight of the monitor 41, to the backlight-control unit 19 (step S1207).

Next, when a keep-light-ON signal is input to the backlight-control unit 19, the backlight-control unit 19 keeps the light to the backlight of the monitor 41 ON.

Also, when the dimming-control signal is input to the backlight-control unit 19, the backlight-control unit 19 dims the backlight of the monitor 41.

Furthermore, when the light-OFF signal is input to the backlight-control unit 19, the backlight-control unit 19 turns OFF the backlight of the monitor 41.

Here, again returning to FIG. 11, in step S1104, when it is determined that there is no match, it is recognized that the vehicle has left the arbitrary conditions set by the user, or in other words, has left the downtown area 1001 shown in FIG. 10, and the CPU 15 outputs an end signal to the backlight-control unit 19 and ambient-light-measurement apparatus 50 (step S1106).

Next, when the end signal is input to the ambient-light-measurement unit 51 of the ambient-light-measurement apparatus 50, the ambient-light-measurement unit 51 stops measuring the brightness of the ambient light, and when the end signal is input to the backlight-control unit 19, the backlight-control unit 19 sets the brightness of the backlight of the monitor 41 to a specified value.

As was explained above, the navigation apparatus 10 of the anti-theft system 2 detects the current position of the vehicle and creates current-position information for the vehicle, then projects the current-position information for the vehicle on map information, and when the projected current-position information for the vehicle matches position information that is contained in condition-range information, or in other words, contained in arbitrary position conditions set by the user, the ambient-light-measurement apparatus 50 compares the brightness value for the ambient light with a first and second specified value, and according to the comparison result, it is possible for the backlight-control unit 19 to switch the control of the backlight of the monitor 41 of the vehicle-mounted apparatus 40.

Therefore, when the vehicle enters the arbitrary position conditions set by the user, or in other words, enters the downtown area 1001 (see FIG. 10), the vehicle has entered a range where it is not desired that the monitor 41 be visible from outside the vehicle, so when in use, according to the brightness outside of the vehicle, it is possible to automatically keep ON, dim or turn OFF of the backlight of the monitor 41 that makes it possible for the vehicle-mounted apparatus to be seen from outside the vehicle, and thus, in comparison to the prior technology, the anti-theft system 2 is able to better improve safety during operation of the vehicle by doing away with manual operation by the user in order to change the control of the backlight of the monitor 41 according to the brightness of the light outside the vehicle, and also improves the ability to prevent theft by properly changing the control of the backlight of the monitor 41 according to the brightness of the light outside the vehicle.

In this embodiment, the backlight of the monitor 41 was controlled according to the brightness of the light outside the vehicle, however, the invention is not limited to this, and instead of a monitor 41,it is also possible to control the backlight of an audio device 42 according to the brightness of the light outside the vehicle, or it is also possible to control the backlight of some other device according to the brightness of the light outside the vehicle.

### (Embodiment 5)

First, the construction of the anti-theft system of a fifth embodiment of the invention will be explained.

Of the structural elements of the anti-theft system 3 of this fifth embodiment of the invention, the structural elements that perform the same processes as the structural elements of the anti-theft system 1 (see FIG. 1) of the first to third embodiments of the invention will be given the same reference numbers and an explanation of those elements will be omitted.

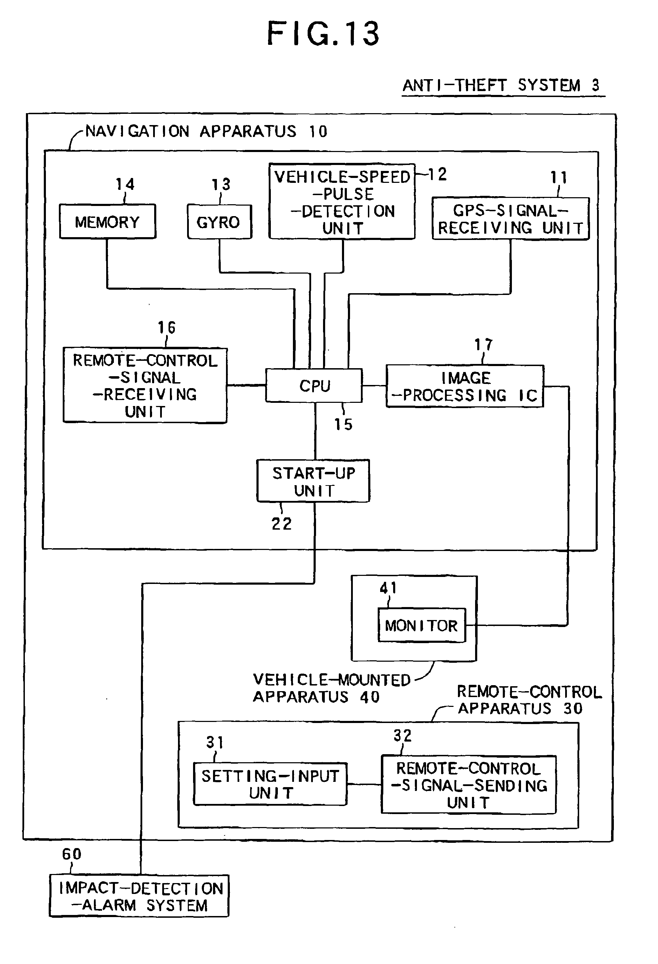

As shown in FIG. 13, the navigation apparatus 10 of the anti-theft system 3 of this embodiment comprises a start-up unit 22 that starts operation of an impact-detection-alarm system 60 (described later).

The impact-detection-alarm system 60 is an external anti-theft system of the invention, and it detects whether or not there was any impact greater than a specified amount to the vehicle-mounted apparatus 40 or vehicle, and generates an alarm when there is impact greater than a specified amount.

Next, the operation of the anti-theft system 3 of this embodiment will be explained.

First, in the navigation apparatus 10, the GPS-signal-receiving unit 11 receives a GPS signal from a GPS satellite, and creates GPS-position information that expresses the vehicle's position using the longitude and latitude information. Also, the CPS-signal-receiving unit outputs the created GPS-position information to the CPU 15.

Next, the vehicle-speed-pulse-detection unit 12 detects the speed pulse of the vehicle, and creates operating-speed information for the vehicle from the detected vehicle-speed pulse. Also, the gyro 13 measures the direction of the vehicle and creates traveling-direction information for the vehicle from the measured vehicle direction. Moreover, the created operating-speed information and traveling-direction information for the vehicle are output to the CPU 15.

The CPU 15 uses the GPS-position information, the operating-speed information and traveling-direction information to calculate current-position information for the vehicle that expresses the current position of the vehicle.

Next, the map information that is stored in the memory 14 is output to the CPU 15.

The CPU 15 inputs the map information to the image-processing IC 17 , and based on the input map information, the image-processing IC 17 creates map-image information that expresses the map of a specified area as an image. The image-processing IC 17 then outputs the created map-image information to the vehicle-mounted apparatus 40.

Next, in the vehicle-mounted apparatus 40, the map-image information is input to the monitor 41, and the monitor 41 displays the input map-image information as a map image.

As shown in FIG. 2, the user looking at the map image displayed on the monitor 41 uses the condition-setting unit 31 of the remote-control apparatus 30, and with the cursor 127 sets an arbitrary position on the map image as the center position 121, and the user also sets a different arbitrary position 122. The remote-control-signal unit 32 includes a circular range 120, which has the set center position 121 as its center and the distance between the center position 121 and position 122 as its radius, in the remote-control signal as condition-range information, or in other words, as the arbitrary conditions set by the user of this invention, and sends that remote-control signal to the navigation apparatus 10.

In the navigation apparatus 10, the remote-control-signal-receiving unit 16 receives the remote-control signal and outputs the condition-range information that is contained in the received remote-control signal to the CPU 15.

Next, as shown in the flowchart (see FIG. 3) showing the process for storing the condition-range information, the CPU 15 determines whether or not there is condition-range information (step S301), and when it determines that there is condition-range information, it determines whether or not using the conditions-range information has been specified (step S302), and when it determines that using the condition-range information has been specified, it stores the condition-range information in the buffer (not shown in the figure) of the CPU 15 (step S303).

The CPU 15 then projects the current-position information for the vehicle that was input to the CPU 15 onto the map information that was similarly input to the CPU 15, and outputs the map information with the projected current-position information for the vehicle to the image-processing IC 17.

Next, the image-processing IC 17 creates navigation-image information that shows a map for performing route guidance that centers on the current position of the vehicle , and outputs the created navigation-image information to the vehicle-mounted apparatus 40.

In the vehicle-mounted apparatus 40, the navigation-image information is input to the monitor 41, and the monitor 41 displays a navigation image based on the input navigation-image information.

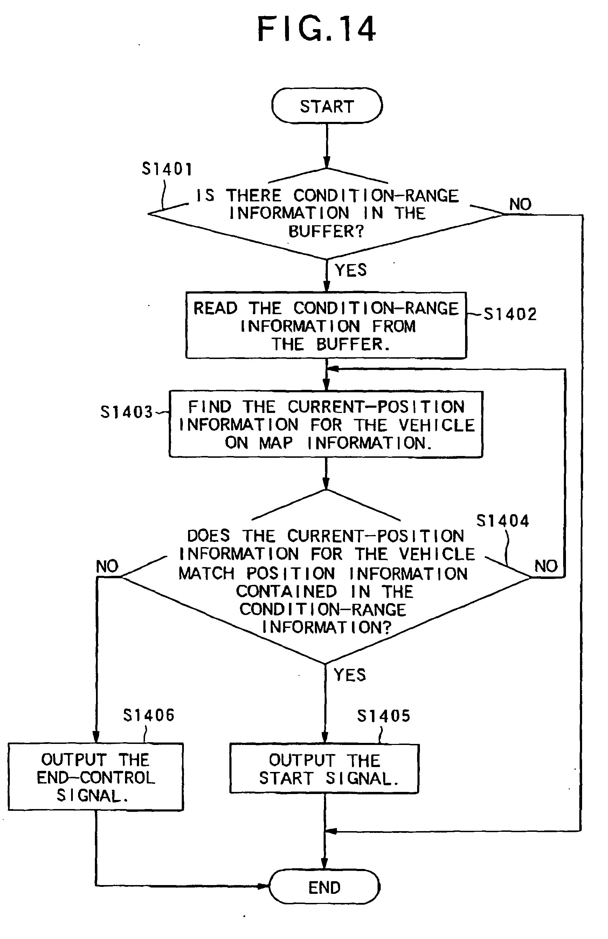

Next, as shown in the flowchart (see FIG 14) of the judgment process for determining whether or not the position information contained in the condition-range information matches the current-position information, the CPU 15 determines whether or not there is condition-range information stored in the buffer (step S1401), and when it determines that condition-range information is stored in the buffer, the CPU 15 reads the condition-range information from the buffer and sets the circular range 120 (see FIG. 2) expressed by the read condition-range information onto the map information (step S1402).

The CPU 15 then detects the current-position information for the vehicle on the map information (step S1403) and determines whether or not the detected current-position information for the vehicle matches the position information contained in the condition-range information (step S1404).

Next, in step S1404, when it is determined that there is a match, it is recognized that the vehicle has entered the arbitrary conditions set by the user, or in other words, has entered the circular range 120 shown in FIG 2, and the CPU 15 outputs a start signal to the start-up unit 22 (step S1405).

Also, in step S1404 when it is determined that there is no match, it is recognized that the vehicle is not inside the arbitrary conditions set by the user, or in other words, is not inside the circular range 120 shown in FIG. 2, and the CPU 15 outputs an end signal to the start-up unit 22 (step 1406).

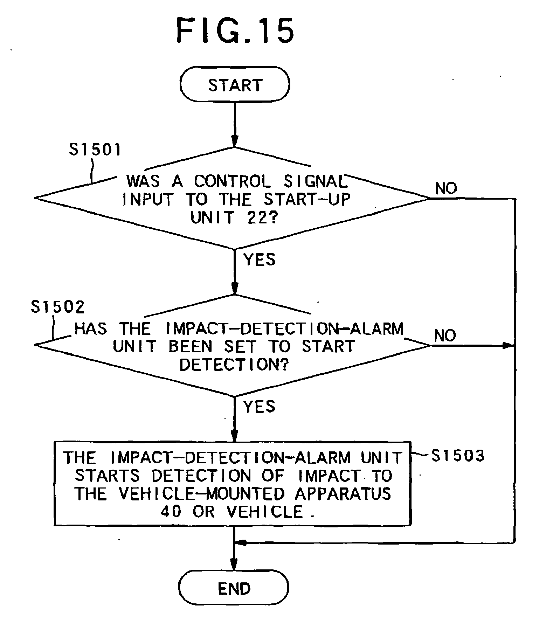

Next, as shown in the flowchart (see FIG. 15) showing the operation for starting detection of impact to the vehicle-mounted apparatus 40 or vehicle by the impact-detection-alarm system 60, the start-up unit 22 determines whether or not a start-up signal has been input to the start-up unit 22 (step S1501), and when it is determined that a start-up signal has been input, the start-up unit 22 determines whether or not the start-up unit 22 has been set to start detection of impact to the vehicle-mounted apparatus 40 or vehicle by the impact-detection-alarm system 60 of this anti-theft system 4 at the input of the start-up signal (step S1502).

In step S1502, when it is determined that the start-up unit 22 has been set to start detection of impact to the vehicle-mounted apparatus 40 or vehicle by the impact-detection-alarm system 60 at the input of the start-up signal, the start-up unit 22 outputs a start-detection signal from the start-up unit 22 to the anti-theft system 4, and when the start-detection signal is input to the impact-detection-alarm system 60, the impact-detection-alarm system 60 starts detecting impact to the vehicle-mounted apparatus 40 or vehicle (step S1503).

Next, when the impact-detection-alarm system 60 detects impact to the vehicle-mounted apparatus 40 or vehicle that is greater than a specified amount, the impact-detection-alarm system 60 outputs an alarm at a volume that can be sufficiently heard outside the vehicle.

As was explained above, the navigation apparatus 10 of the anti-theft system 3 detects the current position of the vehicle and creates current-position information for the vehicle, then projects the current-position information for the vehicle on map information, and when the projected current-position information for the vehicle matches position information that is contained in condition-range information, or in other words, contained in arbitrary position conditions set by the user, the start-up unit 22 outputs a start-up signal to the impact-detection-alarm system 60 of the anti-theft system 4, and the impact-detection-alarm system 60 starts detection of impact to the vehicle-mounted apparatus 40 or vehicle.

Therefore, when the vehicle enters the arbitrary position conditions set by the user, or in other words, enters the circular range 120 (see FIG. 2), the vehicle is in a location where there is a possibility that the user will leave the vehicle, and while the vehicle is in that range, it is possible to start operation of the impact-detection-alarm system 60 of the anti-theft system 4, which is the anti-theft device for a separate system for preventing theft of the vehicle-mounted 40 or vehicle by automatically detecting when there is impact to the vehicle-mounted apparatus 40 or vehicle that is greater than a specified amount, and outputting an alarm outside the vehicle when there is a possibility of theft, so in comparison to the prior technology, the anti-theft system 3 is able to better improve the ability to prevent theft by not forgetting to start operation of the impact-detection-alarm system 60.

In this fifth embodiment of the invention and in FIG. 13, an external anti-theft system, or in other words, an impact-detection-alarm system 60 was presented as an anti-theft means, however, the invention is not limited to this, and instead of an impact-detection-alarm system 60, it is also possible for the anti-theft system 3 itself to have the function of the impact-detection-alarm system 60.

Also, in the fifth embodiment of this invention, an impact-detection-alarm system 60 was explained as an anti-theft means, however, the invention is not limited to this, and another system that has a function for preventing theft is possible.

Moreover, in the preferred embodiments of the invention and in FIG. 1, FIG. 9 and FIG. 13, an apparatus was explained in which the navigation apparatus 10, remote-control apparatus 30 and vehicle-mounted apparatus 40 were all separate from each other, however, the invention is not limited to this, and it is possible for the invention to be constructed with the navigation apparatus 10 and vehicle-mounted apparatus 40 as a single apparatus, or for the invention to be constructed with an apparatus comprising other combinations.

Also, in the preferred embodiments of the invention, the user uses the remote-control apparatus 30 to set arbitrary conditions, however, the invention is not limited to this and it is possible for the user to use a console located on navigation apparatus 10, or for the user to use some other information-input device.

Furthermore, in this invention, the arbitrary conditions by the user are not limited to the example of a circular range 120 shown in FIG. 2, the range 60 shown in FIG. 60, the downtown area 1001 shown in FIG. 10, and it is also possible to use settings that are input by the user or registered information that is registered beforehand by the as the arbitrary conditions.

It should be understood that various alternatives to the embodiment of the invention described herein may be employed in practicing the invention. Thus, it is intended that the following claims define the scope of the invention and that methods and structures within the scope of these claims be covered thereby.

## Claims

1. An anti-theft system (1) comprising:
a current-position-creation device (11, 15) which creates current-position information that indicates the current position of a vehicle;
a position-information-setting device (31) which makes it possible to set specified position information according to arbitrary conditions;
a judgment device (15) which determines whether or not said current-position information matches said specified position information; and
a vehicle-mounted-device-control unit (15) which makes it impossible to detect that a vehicle-mounted device is mounted in said vehicle from outside of said vehicle when it was determined by said judgment device that there was a match.

2. The anti-theft system according to claim 1 wherein
said vehicle-mounted-device-control unit (15) comprises a drive device (18) which drives said vehicle-mounted device into a protruding position in which it can be detected from outside said vehicle, or into a stored position in which it cannot be detected from outside said vehicle; and
said drive device (18) drives said vehicle-mounted device that is in said protruding position to said stored position when said judgment device determines that said current-position information and said specified position information match.

3. The anti-theft system according to claim 1 wherein
said vehicle-mounted-device-control unit (15) comprises a volume-level-control device (21) that increases or decreases the level of the audio output of said vehicle-mounted device that is capable of audio output, and
said volume-level-control device (21) decreases the level of the audio output when said judgment device determines that said current-position information and said specified position information match.

4. The anti-theft system according to claim 1 wherein
said vehicle-mounted device (15) comprises a backlight-control unit (19) which turns on or turns off the backlight of said vehicle-mounted device, and
said backlight-control unit (19) turns off the backlight of said vehicle-mounted device when said judgment device determines that said current-position information and said specified position information match.

5. The anti-theft system according to claim 1, **characterized in that** the anti-theft system further comprises:
an ambient-light-measurement device (51) which measures the brightness of light outside of said vehicle; and
a comparison device (15) which compares the value of the brightness of ambient light measured by the ambient-light-measurement device (51) with predetermined specified values that are reference brightness values for the ambient light; and wherein according to the comparison result by said comparison unit
said vehicle-mounted-device-control unit (15) makes it impossible to detect said vehicle-mounted device when said judgment device determines that said current-position information and said specified position information match.

6. The anti-theft system according to any one of claims to 5 wherein said arbitrary conditions are an arbitrary position specified by the user and a distance from said arbitrary position; and
said specified position information indicates all positions within a circular range having said arbitrary position as its center and said distance as its radius.

7. An anti-theft method comprising:
a current-position-creation process of creating current-position information that indicates the current position of a vehicle;
a position-information-setting process of setting specified position information in map information by inputting arbitrary conditions;
a projection process of projecting said current-position information on said map information;
a judgment process of determining whether or not said current-position information matches said specified position information on said map information; and
a control process of making it impossible to detect that a vehicle-mounted device is mounted in said vehicle from outside of said vehicle when it was determined by said judgment process that there was a match.

8. An anti-theft method according to claim 7, **characterized in that** the anti-theft method further comprises:
an ambient-light-measurement process of measuring the brightness of light outside of said vehicle when said judgment process determined there was a match; and
a comparison process of comparing the value of the brightness of ambient light measured by said ambient-light-measurement process with predetermined specified values that are reference brightness values for the ambient light.

9. A recording medium on which an anti-theft program is recorded in an readable way by a computer included in an anti-theft system, the anti-theft program causing the computer to:
create current-position information that indicates the current position of a vehicle by means of a current-position-creation device;
set specified position information in map information by inputting arbitrary conditions by means of a position-information-sctting device;
project said current-position information on said map information by means of a projection device;
determines whether or not said current-position information matches said specified position information on said map information by means of a judgment device; and
control that a vchicle-mounted device mounted in said vehicle is impossible to detect from outside of said vehicle when it was determined by said judgment process that there was a match by means of a detecting device.

## Patentansprüche

1. Anti-Diebstahlsystem umfassend
eine der Erzeugung der gegenwärtigen Position zugeordnete Vorrichtung (11, 15), die die gegenwärtige Position betreffende Informationen erzeugt, die die gegenwärtige Position eines Fahrzeugs angeben; eine Positionsinformations-Einstellvorrichtung (31), die es ermöglicht, die vorbestimmte Position betreffende Informationen nach beliebigen Bedingungen einzustellen;
eine Beurteilungsvorrichtung (15), die ermittelt, ob die die gegenwärtige Position betreffenden Informationen mit den die vorbestimmte Position betreffenden Informationen übereinstimmen oder nicht; und eine Steuereinheit (15) für fahrzeugmontiertes Gerät, die es unmöglich macht, von außerhalb des Fahrzeugs zu erkennen, dass im Fahrzeug eine fahrzeugmontierte Vorrichtung montiert ist, wenn von der Beurteilungsvorrichtung ermittelt wurde, dass es eine Übereinstimmung gab.

2. Anti-Diebstahlsystem nach Anspruch 1, wobei die Steuereinheit (15) für fahrzeugmontiertes Gerät eine Antriebseinheit (18) umfasst, die die fahrzeugmontierte Vorrichtung in eine herausragende Position, in der sie von außerhalb des Fahrzeugs entdeckt werden kann, oder in eine Verwahrungsposition, in der sie von außerhalb des Fahrzeugs nicht entdeckt werden kann, verfährt, und wobei die Antriebsvorrichtung (18) die fahrzeugmontierte Vorrichtung, die sich in der herausragenden Position befindet, in die Verwahrungsposition verfährt, wenn die Beurteilungsvorrichtung ermittelt, dass die die gegenwärtige Position betreffenden Informationen und die die vorbestimmte Position betreffenden Informationen übereinstimmen.

3. Anti-Diebstahlsystem nach Anspruch 1, wobei die Steuereinheit (15) für fahrzeugmontiertes Gerät eine Lautstärkeniveau-Steuereinrichtung (21) umfasst, die das Niveau des Audioausgangs der zur Abgabe von Schall ausgelegten fahrzeugmontierten Vorrichtung herabsetzt oder erhöht, und
wobei die Lautstärkeniveau-Steuereinrichtung (21) das Niveau der Audioausgabe herabsetzt, wenn die Beurteilungsvorrichtung ermittelt, dass die die gegenwärtige Position betreffenden Informationen und die die vorbestimmte Position betreffenden Informationen übereinstimmen.

4. Anti-Diebstahlsystem nach Anspruch 1, wobei die fahrzeugmontierte Vorrichtung (15) eine Hintergrundbeleuchtungs-Steuereinheit (19) umfasst, die die Hintergrundbeleuchtung der fahrzeugmontierten Vorrichtung einschaltet oder ausschaltet, und wobei die Hintergrundbeleuchtungs-Steuereinheit (19) die Hintergrundbeleuchtung der fahrzeugmontierten Vorrichtung ausschaltet, wenn die Beurteilungsvorrichtung ermittelt, dass die die gegenwärtige Position betreffenden Informationen und die die vorbestimmte Position betreffenden Informationen übereinstimmen.

5. Anti-Diebstahlsystem nach Anspruch 1, **dadurch gekennzeichnet, dass** das Anti-Diebstahlsystem weiterhin umfasst:
eine Umgebungslicht-Messvorrichtung (51), die die Helligkeit von Licht außerhalb des Fahrzeugs misst; und
eine Vergleichsvorrichtung (15), die den von der Umgebungslicht-messvorrichtung (51) gemessenen Wert der Helligkeit des Umgebungslichts mit vorgegebenen, vorbestimmten Werten vergleicht, bei denen es sich um Bezugshelligkeitswerte für das Umgebungslicht handelt; und wobei es die Steuereinheit (15) für fahrzeugmontiertes Gerät entsprechend dem Vergleichsergebnis von der Vergleichseinheit unmöglich macht, das fahrzeugmontierte Gerät zu entdecken, wenn die Beurteilungsvorrichtung ermittelt, dass die die gegenwärtige Position betreffenden Informationen und die die vorbestimmte Position betreffenden Informationen übereinstimmen.

6. Anti-Diebstahlsystem nach einem der Ansprüche 1 bis 5, wobei es sich bei den beliebigen Bedingungen um eine vom Benutzer vorgegebene beliebige Position und einen Abstand von dieser beliebigen Position handelt; und
wobei die die vorbestimmte Position betreffenden Informationen alle Positionen innerhalb eines kreisförmigen Bereichs angeben, der die beliebige Position als seinen Mittelpunkt und den Abstand als seinen Radius aufweist.

7. Anti-Diebstahlverfahren umfassend
ein der Erzeugung der gegenwärtigen Position zugeordnetes Verfahren der Erzeugung von die gegenwärtige Position betreffenden Informationen, die die gegenwärtige Position eines Fahrzeugs angeben; ein Positionsinformations-Einsetzverfahren des Einsetzens von die vorbestimmte Position betreffenden Informationen in Karteninformationen durch Eingeben der beliebigen Bedingungen;
ein Projektionsverfahren des Projizierens der die gegenwärtige Position betreffenden Informationen auf die Karteninformationen;
ein Beurteilungsverfahren des Bestimmens, ob die die gegenwärtige Position betreffenden Informationen mit den die vorbestimmte Position betreffenden Informationen auf den Karteninformationen übereinstimmen; und
ein Steuerverfahren des Verunmöglichens, von außerhalb des Fahrzeugs zu entdecken, dass im Fahrzeug eine fahrzeugmontierte Vorrichtung angebracht ist, wenn durch das Beurteilungsverfahren ermittelt wurde, dass es eine Übereinstimmung gab.

8. Anti-Diebstahlverfahren nach Anspruch 7, **dadurch gekennzeichnet, dass** das Anti-Diebstahlverfahren weiterhin umfasst:
ein Umgebungslicht-Messverfahren des Messens der Helligkeit von Licht außerhalb des Fahrzeugs, wenn im Beurteilungsverfahren ermittelt wurde, dass es eine Übereinstimmung gab; und
ein Vergleichsverfahren des Vergleichens der im Umgebungslicht-Messverfahren gemessenen Werte der Helligkeit des Umgebungslichts mit vorgegebenen, vorbestimmten Werten, bei denen es sich um Bezugshelligkeitswerte für das Umgebungslicht handelt.

9. Aufzeichnungsmedium, auf dem ein Anti-Diebstahlsprogramm von einem zum Anti-Diebstahlsystem gehörenden Computer in einer lesbaren Weise aufgezeichnet ist,
wobei das Anti-Diebstahlprogramm bewirkt, dass der Computer:
mittels einer der Erzeugung der gegenwärtigen Position zugeordneten Vorrichtung die gegenwärtige Position betreffende Informationen erzeugt, die die gegenwärtige Position eines Fahrzeugs angeben;
die die vorbestimmte Position betreffenden Informationen durch Eingabe beliebiger Bedingungen mittels einer Positionsinformations-Einstellvorrichtung in Karteninformationen einsetzt;
die die gegenwärtige Position betreffenden Informationen mittels einer Projektionsvorrichtung auf die Karteninformationen projiziert; mittels einer Beurteilungsvorrichtung ermittelt, ob die die gegenwärtige Position betreffenden Informationen mit den die vorbestimmte Position betreffenden Informationen auf den Karteninformationen übereinstimmen, und
es einrichtet, dass es unmöglich ist, dass eine im Fahrzeug angebrachte fahrzeugmontierte Vorrichtung von außerhalb des Fahrzeugs entdeckt werden kann, wenn mittels einer Erfassungsvorrichtung beim Beurteilungsverfahren ermittelt wurde, dass es eine Übereinstimmung gab.

## Revendications

1. Système antivol comprenant:
un dispositif de création de position actuelle (11, 15) qui crée des informations de position actuelle qui indiquent la position actuelle d'un véhicule;
un dispositif de réglage d'informations de position (31) qui permet de régler des informations de position spécifiée en fonction de conditions arbitraires;
un dispositif de jugement (15) qui détermine si lesdites informations de position actuelle correspondent aux dites informations de position spécifiée; et
une unité de contrôle de dispositif monté sur véhicule (15) qui rend impossible de détecter qu'un dispositif monté sur véhicule est monté dans ledit véhicule de l'extérieur dudit véhicule lorsqu'il a été déterminé par ledit dispositif de jugement qu'il y a une correspondance.

2. Système antivol selon la revendication 1, dans lequel
ladite unité de contrôle de dispositif monté sur véhicule (15) comprend un dispositif d'entraînement (18) qui entraîne ledit dispositif monté sur véhicule dans une position faisant saillie dans laquelle il peut être détecté de l'extérieur dudit véhicule, ou dans une position rangée dans laquelle il ne peut pas être détecté de l'extérieur dudit véhicule; et
ledit dispositif d'entraînement (18) entraîne ledit dispositif monté sur véhicule qui est dans ladite position faisant saillie dans ladite position rangée lorsque ledit dispositif de jugement détermine que lesdites informations de position actuelle et lesdites informations de position spécifiée correspondent.

3. Système antivol selon la revendication 1, dans lequel
ladite unité de contrôle de dispositif monté sur véhicule (15) comprend un dispositif de contrôle de niveau de volume (21) qui augmente ou diminue le niveau de la sortie audio dudit dispositif monté sur véhicule qui est capable de sortie audio, et
ledit dispositif de contrôle de niveau de volume (21) diminue le niveau de la sortie audio lorsque ledit dispositif de jugement détermine que lesdites informations de position actuelle et lesdites informations de position spécifiée correspondent.

4. Système antivol selon la revendication 1, dans lequel
ledit dispositif monté sur véhicule (15) comprend une unité de contrôle de rétroéclairage (19) qui allume ou éteint le rétroéclairage dudit dispositif monté sur véhicule, et
ladite unité de contrôle de rétroéclairage (19) éteint le rétroéclairage dudit dispositif monté sur véhicule lorsque ledit dispositif de jugement détermine que lesdites informations de position actuelle et lesdites informations de position spécifiée correspondent.

5. Système antivol selon la revendication 1, **caractérisé en ce que** le système antivol comprend en outre:
un dispositif de mesure de lumière ambiante (51) qui mesure la luminosité de la lumière à l'extérieur dudit véhicule; et
un dispositif de comparaison (15) qui compare la valeur de la luminosité de la lumière ambiante mesurée par le dispositif de mesure de lumière ambiante (51) aux valeurs spécifiées prédéterminées qui sont des valeurs de luminosité de référence pour la lumière ambiante; et dans lequel, en fonction du résultat de comparaison par ladite unité de comparaison, ladite unité de contrôle de dispositif monté sur véhicule (15) rend impossible de détecter ledit dispositif monté sur véhicule lorsque ledit dispositif de jugement détermine que lesdites informations de position actuelle et lesdites informations de position spécifiée correspondent.

6. Système antivol selon l'une quelconque des revendications précédentes, dans lequel lesdites conditions arbitraires sont une position arbitraire spécifiée par l'utilisateur et une distance par rapport à ladite position arbitraire; et
lesdites informations de position spécifiée indiquent toutes les positions à l'intérieur d'une plage circulaire ayant ladite position arbitraire comme milieu et ladite distance comme rayon.

7. Procédé antivol comprenant:
un processus de création de position actuelle consistant à créer des informations de position actuelle qui indiquent la position actuelle d'un véhicule;
un processus de réglage d'informations de position consistant à régler des informations de position spécifiée dans des informations de carte en entrant des conditions arbitraires;
un processus de projection consistant à projeter lesdites informations de position actuelle sur lesdites informations de carte;
un processus de jugement consistant à déterminer si lesdites informations de position actuelle correspondent aux dites informations de position spécifiée sur lesdites informations de carte; et
un processus de contrôle consistant à rendre impossible de détecter qu'un dispositif monté sur véhicule est monté dans ledit véhicule de l'extérieur dudit véhicule lorsqu'il est déterminé par ledit processus de jugement qu'il y a une correspondance.

8. Procédé antivol selon la revendication 7, **caractérisé en ce que** le procédé antivol comprend en outre:
un processus de mesure de lumière ambiante consistant à mesurer la luminosité de la lumière à l'extérieur dudit véhicule lorsque ledit processus de jugement a déterminé qu'il y a une correspondance; et
un processus de comparaison consistant à comparer la valeur de la luminosité de la lumière ambiante mesurée par ledit processus de mesure de lumière ambiante aux valeurs spécifiées prédéterminées qui sont des valeurs de luminosité de référence pour la lumière ambiante.

9. Support d'enregistrement sur lequel un programme antivol est enregistré de manière lisible par un ordinateur compris dans un système antivol, le programme antivol amenant l'ordinateur à:
créer des informations de position actuelle qui indiquent la position actuelle d'un véhicule au moyen d'un dispositif de création de position actuelle;
régler des informations de position spécifiée dans des informations de carte en entrant des conditions arbitraires au moyen d'un dispositif de réglage d'informations de position;
projeter lesdites informations de position actuelle sur lesdites informations de carte au moyen d'un dispositif de projection; déterminer si lesdites informations de position actuelle correspondent aux dites informations de position spécifiée sur lesdites informations de carte au moyen d'un dispositif de jugement; et
contrôler si un dispositif monté sur véhicule monté dans ledit véhicule est impossible à détecter de l'extérieur dudit véhicule lorsqu'il est déterminé par ledit processus de jugement qu'il y a une correspondance au moyen d'un dispositif de détection.
